(19) **Europäisches Patentamt**

**European Patent Office**

**Office européen des brevets**

(11) Numéro de publication: **0 349 425 B1**

(12) **FASCICULE DE BREVET EUROPEEN**

(45) Date de publication de fascicule du brevet: **15.12.93** (51) Int. Cl.⁵: **H01J 31/15,** H04N 9/12

(21) Numéro de dépôt: **89401852.2**

(22) Date de dépôt: **28.06.89**

(54) **Ecran fluorescent trichrome à micropointes.**

(30) Priorité: **29.06.88 FR 8808754**

(43) Date de publication de la demande:
**03.01.90 Bulletin 90/01**

(45) Mention de la délivrance du brevet:
**15.12.93 Bulletin 93/50**

(84) Etats contractants désignés:
**CH DE GB IT LI NL**

(56) Documents cités:
**EP-A- 0 155 895**
**EP-A- 0 172 089**
**DE-A- 3 036 219**
**FR-A- 2 536 889**

(73) Titulaire: **COMMISSARIAT A L'ENERGIE ATO-MIOUE**
**31/33, rue de la Fédération**
**F-75015 Paris Cédex 15(FR)**

(72) Inventeur: **Clerc, Jean-Frédéric**
**Kogasaka Village D3**
**681-12 Kogasaka**
**Machida-shi Tokyo 194(JP)**

(74) Mandataire: **Mongrédien, André et al**
**c/o BREVATOME**
**25, rue de Ponthieu**
**F-75008 Paris (FR)**

## Description

La présente invention a pour objet un écran fluorescent trichrome à micropointes, son procédé d'adressage et son procédé de fabrication. Ce type d'écran s'applique notamment à l'affichage en couleur d'images fixes ou animées.

Les écrans fluorescents à micropointes connus sont monochromes. On peut en trouver une description dans la demande de brevet français FR-A-2568394. La technique utilisée pour les écrans monochromes peut être extrapolée à des écrans trichromes.

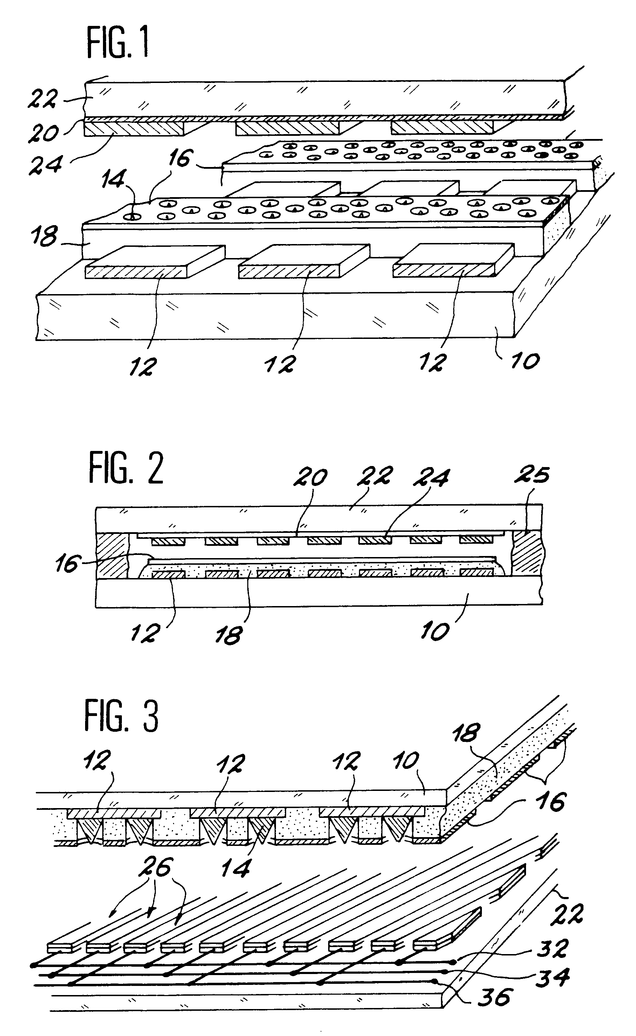

La figure 1 représente schématiquement en perspective un écran trichrome tel que pourrait l'extrapoler un Homme du métier à partir d'un écran monochrome.

Sur un premier substrat 10, en verre par exemple, sont disposées des colonnes conductrices 12 (conducteurs cathodiques) supportant des micropointes 14 métalliques. Les colonnes croisent des lignes conductrices perforées 16 (grilles).

Toutes les micropointes 14 positionnées à un croisement d'une ligne et d'une colonne ont leur sommet sensiblement en face d'une perforation de la ligne. Conducteurs cathodiques 12 et grilles 16 sont séparés par une couche isolante 18 en silice par exemple, pourvue d'ouvertures permettant le passage des micropointes 14.

Une couche 20 de matériau conducteur (anode) est déposée sur un second substrat 22 transparent en verre par exemple. Des bandes 24 parallèles alternativement en phosphore rouge, vert et bleu sont déposés sur l'anode 20 en regard des conducteurs cathodiques 12. Les bandes peuvent être remplacées par un motif mosaïque.

Dans cette configuration, il faut un triplet de conducteurs cathodiques 12 (un face à une bande rouge, un face à une bande verte, un face à une bande bleue) pour assurer l'affichage en couleur le long d'une colonne de l'écran.

Chaque intersection d'une grille 16 et d'un conducteur cathodique 12 correspond dans ce mode de réalisation à un pixel monochrome. Un pixel "couleur" est composé de trois pixels monochromes rouge, vert et bleu.

L'association de ces trois couleurs primaires (rouge, vert, bleu) permet à l'oeil de reconstituer un large spectre coloré.

Un écran matriciel comprenant 575 lignes et 720 colonnes, par exemple (standard de la télévision française) correspond à un écran fluorescent à micropointes comprenant 575 grilles et 720 x 3 = 2160 conducteurs cathodiques.

La figure 2 représente schématiquement une section d'un écran trichrome extrapolé à partir d'un écran monochrome. Le premier substrat 10 et le second substrat 22 sont collés à l'aide d'un joint 25 de verre fusible pour former une cellule. Cette cellule est sous vide pour un bon fonctionnement de l'écran.

On voit sur la figure 2, les conducteurs cathodiques 12 séparés des grilles 16 par la couche 18 isolante. Les conducteurs cathodiques 12 sont en regard des bandes 24 en phosphore rouge, vert, bleu. Les micropointes ne sont pas représentées.

La largeur L d'un conducteur cathodique ainsi que de la bande 24 en regard est approximativement de 100 micromètres ; la distance D qui sépare deux conducteurs cathodiques 12 (et donc deux bandes 24) est d'environ 50 micromètres ; la distance G entre les conducteurs cathodiques 12 et l'anode 20 est approximativement de 150 micromètres (cette dernière distance correspond environ à l'épaisseur du joint 25 de colle disposé entre les deux substrats).

Le scellement des deux substrats 10, 22 s'effectue à chaud (à une température d'environ 400°C) par fusion et écrasement d'une baguette de verre fusible.

Pour un bon fonctionnement, la mise en regard des bandes 24 parallèles en phosphore rouge, vert et bleu et des conducteurs cathodiques 12 associés nécessite un positionnement précis.

En pratique, le maintien du positionnement des deux substrats 10, 22 en regard est très délicat pendant le scellement. Cette difficulté est d'autant plus marquée que le rapport G/D croît.

Un problème voisin a été résolu pour les cellules d'affichage en couleur à cristaux liquides. Mais pour ces dernières, l'épaisseur équivalente G entre les deux substrats n'est que de 5 micromètres (au lieu de 150 micromètres pour l'écran à micropointes) pour la même résolution des motifs et ta même précision de positionnement requise. D'autre part, le scellement est effectué à basse température par des joints de colle durcis par irradiation de lumière U.V. après positionnement et avant l'étuvage de scellement. L'utilisation de ce type de collage est interdite pour tes écrans à micropointes. En effet, ces colles dégagent des vapeurs qui casseraient te vide de ta cellule. La technique de positionnement avant le durcissement de la colle n'est pas permise en raison de la température élevée nécessaire pour fondre et écraser le verre fusible.

Pour un écran trichrome, par rapport à un écran fluorescent monochrome à micropointes, le nombre de conducteurs cathodiques est multiplié par trois. Le nombre accru de circuits d'adressage des conducteurs cathodiques entraîne un coût additionnel.

La présente invention permet la réalisation d'un écran fluorescent trichrome à micropointes qui ne nécessite pas de positionnement entre les deux substrats 10, 22.

Il est connu de plus par le document DE-A-3 036 219 un écran d'affichage fluorescent trichrome utilisant trois conducteurs cathodiques, trois anodes et une grille par point-image.

D'autre part, l'invention permet de réduire le nombre des circuits de commande (ce nombre est divisé par trois) des conducteurs cathodiques en ne rajoutant que trois circuits supplémentaires d'adressage des électrodes anodes.

L'invention préconise l'utilisation de trois anodes (une pour la couleur rouge, une pour la couleur verte, une pour la couleur bleue). A un instant donné, une seule de ces anodes est portée à un potentiel suffisamment élevé pour attirer les électrons émis par les micropointes. Les deux autres anodes sont portées à un potentiel tel que les électrons émis sont repoussés.

Dans un dispositif selon l'invention, la disposition sur le substrat 10 des conducteurs cathodiques 12, des grilles 16, de l'isolant 18 interposé est la même que pour les écrans monochromes.

De manière plus précise, la présente invention concerne un écran fluorescent trichrome à micropointes à affichage matriciel comportant un premier substrat sur lequel sont disposées selon les deux directions de la matrice des colonnes conductrices formant des conducteurs cathodiques et supportant des micropointes et par dessus les colonnes, des lignes conductrices perforées formant des grilles, les lignes et les colonnes étant séparées par une couche isolante pourvue d'ouvertures permettant le passage des micropointes, chaque croisement d'un conducteur cathodique et d'une grille correspondant à un pixel, et un second substrat en regard du premier, caractérisé en ce que ledit écran comporte sur le second substrat des bandes conductrices et parallèles, alternativement recouvertes d'un matériau luminescent dans le rouge formant des anodes dites rouges, d'un matériau luminescent dans le vert formant des anodes dites vertes, et d'un matériau luminescent dans le bleu formant des anodes dites bleues, les bandes conductrices recouvertes du même matériau luminescent étant électriquement reliées entre elles, ces bandes conductrices étant régulièrement espacées de façon que chaque croisement d'un conducteur cathodique et d'une grille soit en face de trois anodes recouvertes respectivement d'un matériau luminescent dans le rouge, le vert et le bleu.

Cette disposition de trois anodes en forme de peigne sur le second substrat permet de s'affranchir de tout positionnement. Les bandes conductrices des anodes sont placées, par exemple, sensiblement dans la même direction que les conducteurs cathodiques, trois bandes successives rouge, verte, bleue faisant face de manière avantageuse a un conducteur cathodique.

Les bandes conductrices peuvent bien entendu prendre n'importe quelle direction par rapport à la direction des conducteurs cathodiques. Par ailleurs, le nombre de bandes conductrices est indépendant du nombre de conducteurs cathodiques. De préférence, le nombre de bandes conductrices est supérieur à trois fois le nombre des conducteurs cathodiques pour assurer une meilleure fusion visuelle de la couleur.

La présente invention a aussi pour objet un procédé d'adressage de l'écran fluorescent trichrome à micropointes. Ce procédé consiste à porter les anodes Ai, i allant de 1 à 3, successivement, périodiquement, à un potentiel VAimax, suffisant pour attirer les électrons émis par les micropointes des conducteurs cathodiques correspondant aux pixels devant être "allumés" dans la couleur de l'anode Ai considérée ; lorsqu'elles ne sont pas portées au potentiel VAimax, les anodes Ai sont portées à un potentiel VAimin tel que les électrons émis par les micropointes sont repoussés ou ont une énergie inférieure à l'énergie seuil de cathodoluminescence des matériaux luminescents recouvrant les anodes Ai.

Dans un premier mode de réalisation préféré, l'affichage d'une trame trichrome de l'image se faisant pendant un temps de trame T, les anodes Ai sont portées au potentiel VAimax selon une période égale au temps de trame T, ce temps de trame T étant divisé en trois durées t1, t2, t3 correspondant aux durées pendant lesquelles les anodes A1, A2, A3 sont portées aux potentiels VA1max, VA2max, VA3max.

Dans un second mode de réalisation préféré, l'affichage d'une trame trichrome de l'image se faisant en adressant séquentiellement chaque ligne de conducteur grille pendant un temps de sélection t, les anodes Ai sont portées au potentiel VAimax selon une période égale au temps de sélection t, ce temps de sélection t étant divisé en trois durées $\theta 1$, $\theta 2$, $\theta 3$ correspondant aux durées pendant lesquelles les anodes A1, A2, A3 sont portées aux potentiels VA1max, VA2max, VA3max.

Dans ces modes de réalisation du procédé, les trois couleurs ne sont jamais affichées en même temps. La sensation de couleur sur un large spectre perçue par un observateur de l'écran est dûe à une reconstitution du spectre coloré par l'oeil du spectateur. L'oeil est un détecteur "lent", par rapport au temps de trame de l'écran et la perception de la pleine couleur est dûe à un effet de moyenne sur plusieurs trames de l'image.

La présente invention concerne aussi un procédé de fabrication d'un écran fluorescent trichrome à micropointes. Ce procédé de fabrication consiste à :

- recouvrir le second substrat d'un matériau conducteur,

- graver dans ledit matériau des bandes parallèles régulièrement espacées, les bandes étant alternativement regroupées en trois séries, une première série de ces bandes étant reliée électriquement par une première bande de connexion en matériau conducteur, cette première bande de connexion étant perpendiculaire aux bandes parallèles et placée à une de leurs extrémités, une seconde série de ces bandes parallèles étant reliée électriquement par une seconde bande de connexion en matériau conducteur, cette seconde bande de connexion étant perpendiculaire aux bandes parallèles et placée à l'autre de leurs extrémités,
- relier électriquement la troisième série de bandes parallèles par un ruban conducteur anisotrope,
- recouvrir une série de bandes parallèles par un matériau apte à émettre de la luminescente dans le rouge, une seconde série de bandes parallèles par un matériau apte à émettre de la luminescence dans le bleu, la dernière série de bandes parallèles par un matériau apte à émettre de la luminescence dans le vert.

Le matériau conducteur des première et seconde bandes de connexion peut être du même matériau que les bandes parallèles.

Dans une variante de réalisation du procédé de fabrication, la première et la seconde bandes de connexion sont des rubans conducteurs anisotropes.

D'autres caractéristiques et avantages de l'invention apparaîtront mieux après la description qui suit donnée à titre explicatif et nullement limitatif. Cette description se réfère à des dessins annexés sur lesquels :
- la figure 1 déjà décrite représente schématiquement en perspective un écran trichrome extrapolé à partir d'un écran monochrome ;
- la figure 2 déjà décrite représente schématiquement une section d'un écran trichrome extrapolé à partir d'un écran monochrome ;
- la figure 3 représente schématiquement en perspective un écran selon l'invention ;
- la figure 4 représente schématiquement un mode de connexion entre les bandes conductrices ;
- la figure 5 représente schématiquement un autre mode de connexion entre les bandes conductrices ;
- la figure 6 représente schématiquement une section d'un écran selon l'invention ;
- la figure 7 représente les chronogrammes se rapportant à un premier procédé d'adressage d'un écran selon l'invention ;

- la figure 8 représente les chronogrammes se rapportant à un second procédé d'adressage d'un écran selon l'invention.

La figure 3 représente schématiquement en perspective un écran selon l'invention. Sur un premier substrat 10 en verre par exemple on retrouve suivant des colonnes, les conducteurs cathodiques 12 en I.T.O. (oyxde d'étain et d'indium, indium tin oxide en terminologie anglo-saxonne) par exemple supportant les micropointes 14, suivant des lignes les grilles 16 en niobium par exemple séparées des conducteurs cathodiques 12 par une couche 18 en matériau isolant en silice par exemple. Cette première partie du dispositif est en tout point identique à celle qu'on trouve dans les écrans monochromes.

Sur un second substrat 22 en verre par exemple sont disposées des bandes conductrices 26 parallèles et régulièrement espacées. Ces bandes 26 sont représentées en diagonale par rapport à la direction des conducteurs cathodiques 12 pour bien mettre en évidence qu'aucun positionnement n'est nécessaire dans ce type d'écran. Il est bien sûr avantageux de placer ces bandes 26 sensiblement en regard des conducteurs cathodiques 12 et dans une direction parallèle. Ces bandes 26 sont alternativement recouvertes, pour une première série de ces bandes 26, d'un matériau 28 apte à émettre de la luminescence dans le rouge, ce matériau 28 peut être du $Y_2O_2S$ dopés à l'europium, pour une seconde série de ces bandes 26, d'un matériau 29 apte à émettre de la luminescence dans le vert, ce matériau 29 peut être du ZnS dopé au CuAl, pour une troisième série de ces bandes 26, d'un matériau 30 apte à émettre de la luminescence dans le bleu, ce matériau 30 peut être du ZnS dopé à l'Ag.

D'une manière préférentielle, les bandes 26 conductrices sont espacées de manière à ce qu'un triplet rouge, vert, bleu au moins soit superposé à chaque croisement d'un conducteur cathodique 12 et d'une grille 16.

Les bandes 26 conductrices de la première série recouvertes de matériau 28 sont reliées électriquement entre elles par une première bande de connexion 32 schématisée sur la figure 3 par un fil de connexion. Cette première série de bandes 26 conductrices correspond à une anode A1. Les bandes 26 conductrices de la seconde série recouvertes de matériau 29 sont reliées électriquement entre elles par une seconde bande de connexion 34 schématisée sur la figure 3 par un fil de connexion. Cette seconde série de bandes 26 conductrices correspond à une anode A2. Les bandes 26 conductrices de la troisième série recouvertes de matériau 30 sont reliées électriquement entre elles par un ruban conducteur anisotrope 36 schématisé sur la figure 3 par un fil de connexion.

Cette troisième série de bandes 26 conductrices correspond à une anode A3.

Le pas entre les bandes conductrices 26 est en correspondance avec la bande passante du signal chrominance de la vidéo (environ 150 micromètres pour un écran de 1 dm$^2$). Le nombre de conducteurs cathodiques 12 est quant à lui en correspondance avec la bande passante du signal luminosité de la vidéo (environ 500 conducteurs cathodiques pour une bande passante d'environ 3 MHz).

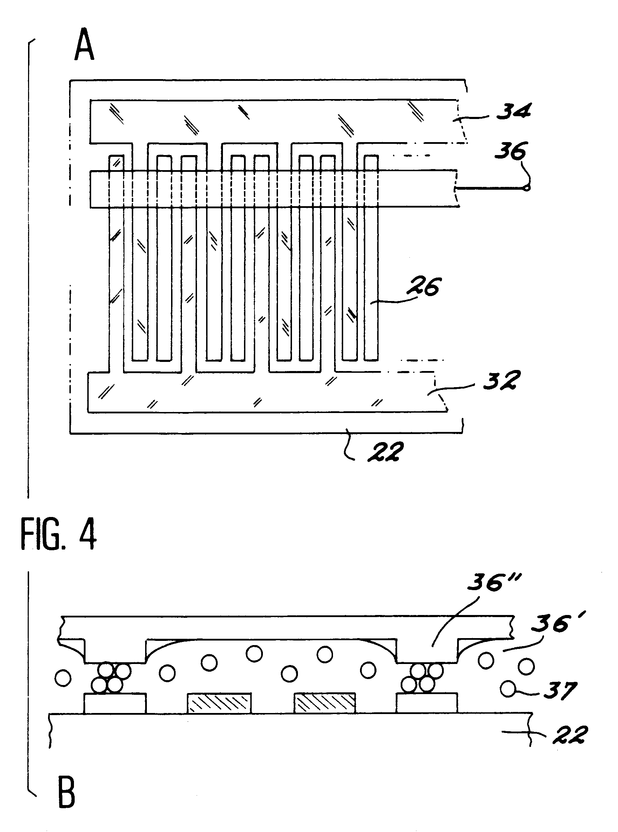

La figure 4A précise comment sont reliées entre elles les différentes bandes 26 conductrices selon un mode préféré de réalisation. Ces bandes 26 sont gravées dans un matériau conducteur en I.T.O par exemple, recouvrant le substrat 22. Pour deux séries de ces bandes 26, on grave en même temps, dans le même matériau conducteur les bandes de connexion 32, 34 placées chacune à une extrémité des bandes 26 conductrices. Ces deux séries prennent la forme de peignes disposés tête bêche. Les dents d'un des peignes alternent avec les dents de l'autre peigne puis avec les bandes 26 conductrices de la troisième série. Ces bandes 26 conductrices de la troisième série sont électriquement reliées entre elles par un ruban conducteur anisotrope 36. Ce ruban conducteur anisotrope 36 est déposé perpendiculairement aux bandes 26 conductrices.

La figure 4B représente une section de l'écran suivant le ruban conducteur anisotrope 36. Ce dernier est principalement composé d'une barrette conductrice 36'' et d'un film 36'.

Comme on le voit sur la figure 4B la barrette conductrice 36'' écrase le film 36' par l'intermédiaire de surépaisseurs de la barrette positionnées en vis-à-vis des bandes 26 de la troisième série. Le film 36' comprend des billes 37 conductrices en carbure. Ces billes 37 sont disséminées dans un liant isolant composant le film 36' de manière à ne pas conduire l'électricité. La densité de billes 37 est telle qu'aux endroits écrasés les billes 37 sont en contact, le ruban devient conducteur en ces endroits. Par ce moyen, les bandes conductrices 26 de la troisième série sont reliées électriquement à la barrette conductrice 36'' alors que les endroits non écrasés du film 36' sont isolants.

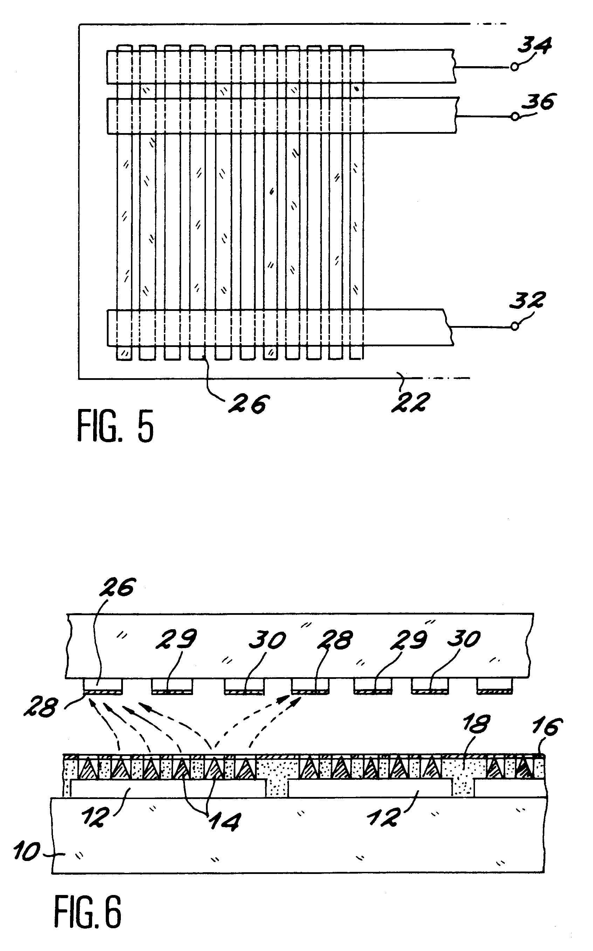

Comme on le voit figure 5, l'usage de rubans conducteurs anisotropes peut être étendu aux première et seconde bandes de connexion 32, 34.

La figure 6 représente schématiquement une section d'un écran selon l'invention. Lors de l'excitation d'un pixel correspondant au croisement d'un conducteur cathodique 12 et d'une grille 16, les micropointes 14 émettent des électrons. Si l'anode A1 (respectivement A2, A3) correspondant aux bandes conductrices 26 recouvertes du matériau 28 luminescent dans le rouge est adressée, les anodes A2 (respectivement A1, A3) et A3 (respectivement A1, A2) sont portées à des potentiels tels que les électrons sont repoussés. Ainsi, quel que soit le positionnement des bandes 26 conductrices, le "délavage" des couleurs dû à une excitation parasite des anodes A2 (respectivement A1, A3) et A3 (respectivement A1, A2) est évité. Evidemment, le phénomène est identique quand les anodes A2 et A3 sont adressées.

Un écran selon l'invention permet de diviser par trois le nombre de circuits de commande des conducteurs cathodiques 12 par rapport au nombre de circuits de commande requis dans le cas d'un écran trichrome simplement extrapolé d'un écran monochrome. Ce gain appréciable et cette simplification de la circuiterie de commande se fait au prix de trois circuits d'adressage des anodes A1, A2, A3 supplémentaires.

On donne ci-après deux exemples non limitatif de procédés d'adressage d'un écran à anode triple selon l'invention.

Premier exemple de signaux d'adressage de l'écran selon l'invention.

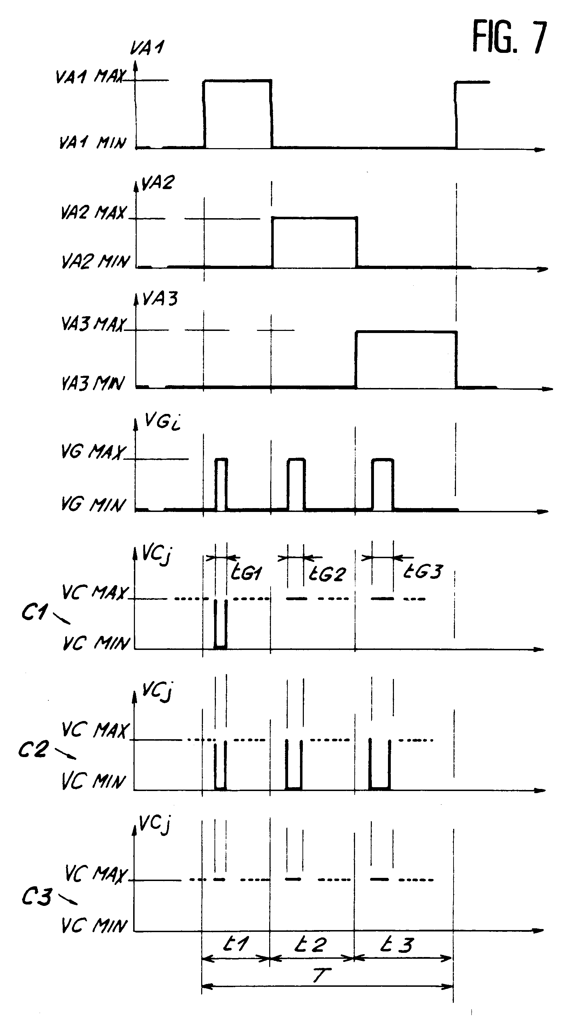

Ce premier mode d'adressage est représenté sur la figure 7. Selon ce mode d'adressage une image en couleur est réalisée grâce à trois balayages successifs de l'écran correspondant à trois sous-trames rouge, verte et bleue.

L'affichage d'une trame trichrome de l'image se fait pendant un temps de trame T. Les anodes A1, A2, A3 sont portées respectivement aux potentiels VA1, VA2, VA3. Successivement et périodiquement, les potentiels VA1, VA2, VA3 prennent des valeurs VA1max, VA2max, VA3max suffisantes pour attirer les électrons émis par les micropointes 14 des conducteurs cathodiques 12 correspondant aux pixels devant être "allumés" dans la couleur de l'anode A1, A2, A3 considérée.

Les potentiels VA1, VA2, VA3 prennent leurs valeurs VA1max, VA2max, VA3max avec une période égale au temps de trame T. Ce temps de trame T est divisé en trois durées t1, t2, t3 pendant lesquelles les potentiels VA1, VA2, VA3 sont maintenus aux valeurs VA1max, VA2max, VA3max.

Les valeurs VA1max, VA2max, VA3max ainsi que les durées t1, t2, t3 sont adaptées aux rendements lumineux respectifs des matériaux luminescents 28, 29, 30. Ces valeurs sont ajustées de manière expérimentale de sorte que la saturation des matériaux luminescents 28, 29, 30 donne un blanc pur quand tous les pixels de l'écran et toutes les couleurs sont "allumés", cette mesure étant moyennée sur plusieurs trames de l'image ; VA1max, VA2max, VA3max sont de l'ordre de 100V par exemple.

Dans cet exemple de procédé d'adressage, les trois durées t1, t2, t3 correspondent à des sous-trames de l'image pendant lesquelles s'affichent successivement les trois composantes monochromes rouge, verte et bleue de l'image. En dehors des durées pendant lesquelles ils sont portés à VA1max, VA2max, VA3max, les potentiels VA1, VA2, VA3 prennent des valeurs VA1min, VA2min, VA3min respectivement. Ces valeurs sont telles que les électrons émis par les micropointes 14 sont repoussés ou reçus par les anodes avec des énergies inférieures aux énergies seuil de luminescente des matériaux 28, 29, 30.

On voit sur la figure 7 le potentiel VGi auquel est porté la grille i. Périodiquement, VGi prend la valeur VGmax égale à 40V par exemple pendant des durées tG1, tG2, tG3 de sélection grille. tG1 est le temps de sélection grille pendant lequel VGi = VGmax, cet adressage s'effectuant pendant le temps de sous-trame t1, tG2 est le temps de sélection grille pendant lequel VGi = VGmax, cet adressage s'effectuant pendant le temps de sous-trame t2, tG3 est le temps de sélection grille pendant lequel VGi = VGmax pendant le temps de sous-trame t3. En dehors de ces durées tG1, tG2 et tG3, VGi prend la valeur VGmin égale à -40V par exemple. La période de ces créneaux successifs de durée tG1, tG2 et tG3 est égale à un temps de trame T.

Les durées tG1, tG2 et tG3 sont reliées aux durées t1, t2, t3 par la relation :

$$\frac{t1}{tG1} = \frac{t2}{tG2} = \frac{t3}{tG3} = N$$

où N est égal au nombre de lignes de l'écran.

On donne ensuite sur la figure 7 les signaux de commande VCj du conducteur cathodique j permettant d'"allumer" le pixel ij.

Ces signaux de commande VCj sont donnés dans les trois cas suivant :
chronogramme C1 :
pixel ij "allumé" dans la couleur rouge.
chronogramme C2 :
pixel ij "allumé" dans les trois couleurs rouge, vert, bleu, pixel ij "blanc".
chronogramme C3 :
pixel ij "éteint", état "noir".

Pour le pixel ij devant être "éteint" (c'est-à-dire dans un état "noir") le potentiel VCj prend une valeur VCmax égale à OV par exemple.

Pour "allumer" le pixel ij (chronogramme C1) dans la couleur rouge (respectivement verte, bleue) VCj est portée à une valeur VCmin égale à -40V par exemple, pendant le temps de sélection grille tG1 (respectivement tG2, tG3).

Pour "allumer" le pixel ij dans les trois couleurs primaires rouge, vert, bleu, (c'est-à-dire pour obtenir un état "blanc") (chronogramme C2) le potentiel VCj prend la valeur VCmin pendant les durées tG1, tG2, tG3 de sélection de grille dans les trois couleurs. Le pixel ij étant "éteint" (état "noir") (chronogramme C3), le potentiel VCj est maintenu à la valeur VCmax pendant les temps de sélection tG1, tG2, tG3.

Le potentiel de sélection ligne VGmax est choisi de façon telle que l'émission électronique soit pratiquement nulle lorsque le potentiel VCmax est appliqué sur le conducteur cathodique et correspond à la brillance maximale désirée de l'écran (200 cd/m² par exemple) lorsque le potentiel VCmin est appliqué sur le conducteur cathodique.

Données numériques correspondant à cet exemple.

N : nombre de lignes = 575
T : temps de trame = 20 ms
t1 : temps de sélection de l'anode A1 (sous-trame 1) = 6,6 ms
t2 : temps de sélection de l'anode A2 (sous-trame 2) = 6,6 ms
t3 : temps de sélection de l'anode A3 (sous-trame 3) = 6,6 ms
tG1 : temps de sélection d'une ligne pendant la sous-trame 1 = 11 μs
tG2 : temps de sélection d'une ligne pendant la sous-trame 2 = 11 μs
tG3 : temps de sélection d'une ligne pendant la sous-trame 3 = 11 μs
VA1 : potentiel de l'anode A1 = VA1max = 100 V
VA1min = 40 V
VA2 : potentiel de l'anode A2 = VA2max = 100 V
VA2min = 40 V
VA3 : potentiel de l'anode A3 = VA3max = 150 V
VA3min = 40 V
VGi : potentiel de la grille i = VGmax = 40 V
VGmin = -40 V
VCj : potentiel du conducteur cathodique j = VCmax = 0 V
VCmin = -40 V

Deuxième exemple de signaux d'adressage de l'écran selon l'invention.

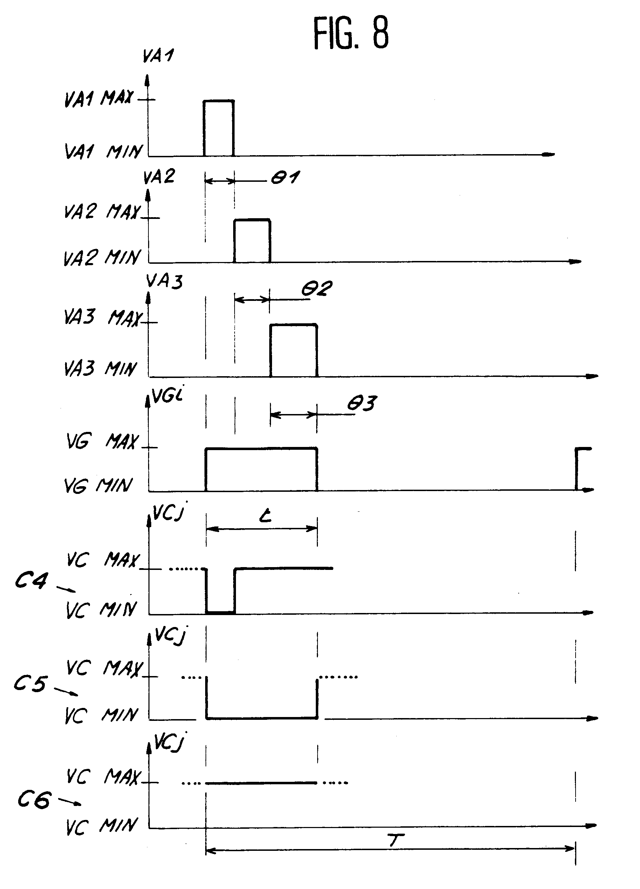

Ce second mode d'adressage est représenté sur la figure 8. Selon ce mode d'adressage, une image couleur est réalisée grâce à l'écriture de chacune des trois couleurs primaires rouge, verte, bleue, ligne après ligne.

De manière usuelle, chaque ligne i (grille) est adressée pendant un temps t de sélection grille, c'est-à-dire qu'à la période T de temps de trame, le potentiel VGi prend la valeur VGmax pendant une durée t, autrement VGi est égal à VGmin.

Les anodes A1, A2, A3 sont portées à des potentiels VA1, VA2, VA3 respectivement. Périodiquement (à la période t, temps de sélection ligne) VA1, VA2, VA3 prennent successivement des valeurs VA1max, VA2max, VA3max pendant des durées $\theta 1$, $\theta 2$, $\theta 3$ respectivement. Ils prennent des valeurs VA1min, VA2min, VA3min, si non. Les durées $\theta 1$, $\theta 2$, $\theta 3$ sont liées au temps de sélection de grille t par la relation :

$$t = \theta 1 + \theta 2 + \theta 3$$

Bien entendu, le temps de sélection de grille est relié au temps de trame T par la relation :

$$t = \frac{T}{N}$$

où N est le nombre de lignes de l'écran.

On donne aussi sur la figure 8 les signaux de commande VCj du conducteur cathodique j permettant "d'allumer" le pixel ij.

Ce pixel ij étant "éteint" (état "noir") le potentiel VCj prend une valeur Vcmax égale à 0V par exemple.

Les signaux de commande VCj sont donnés dans les trois cas suivant :
Chronogramme C4 :
pixel ij "allumé" dans la couleur rouge.
Chronogramme C5 :
pixel ij "allumé" dans les trois couleurs rouge, vert, bleu, pixel ij "blanc".
Chronogramme C6 :
pixel ij "éteint", pixel "noir".

Le chronogramme C4 décrit le potentiel VCj lors de l'adressage du conducteur cathodique j permettant d'"allumer" le pixel ij dans la couleur rouge (respectivement verte, bleue). Pendant la durée $\theta 1$ (respectivement $\theta 2$, $\theta 3$) d'adressage de l'anode A1 rouge (respectivement A2 verte, A3 bleue) VCj prend la valeur VCmin, VCj est égal à VCmax pendant le reste du temps de sélection de la ligne i.

Le chronogramme C5 décrit le potentiel VCj lors de l'adressage du conducteur cathodique j permettant d'"allumer" le pixel ij dans les trois couleurs rouge, vert, bleu, c'est-à-dire d'obtenir un état "blanc" pour le pixel ij. Dans ce cas, VCj est porté à VCmin pendant toute la durée t de sélection de la ligne i.

Le chronogramme C6 décrit le potentiel VCj lors de l'adressage du conducteur cathodique j dans le cas où le pixel ij est "éteint". Dans ce cas VCj est maintenu à la valeur VCmax pendant la durée t de sélection de la ligne i.

Données numériques correspondant à cet exemple :
N :      nombre de lignes = 575
T :      Temps de trame = 20 ms
t :      temps de sélection d'une ligne (grille) = 33 $\mu$s

$\theta 1$ :      Temps de sélection de l'anode A1 = 11 $\mu$s
$\theta 2$ :      temps de sélection de l'anode A2 = 11 $\mu$s
$\theta 3$ :      temps de sélection de l'anode A3 = 11 $\mu$s
VA1 :      potentiel de l'anode A1 = VA1max = 100 V
     VA1min = 40 V
VA2 :      potentiel de l'anode A2 = VA2max = 100 V
     VA2min = 40 V
VA3 :      potentiel de l'anode A3 = VA3max = 150 V
     VA3min = 40 V
VGi :      potentiel de grille i = VGmax = 40 V
     VGmin = -40 V
VCj :      potentiel de conducteur cathodique j = VCmax = 0 V
     VCmin = -40 V

## Revendications

1. Ecran fluorescent trichrome à micropointes à affichage matriciel comportant un premier substrat (10) sur lequel sont disposées selon les deux directions de la matrice des colonnes conductrices (12) formant des conducteurs cathodiques et supportant des micropointes (14) et par dessus les colonnes, des lignes conductrices perforées (16) formant des grilles, les lignes et les colonnes étant séparées par une couche isolante (18) pourvue d'ouvertures permettant le passage des micropointes (14), chaque croisement d'un conducteur cathodique et d'une grille correspondant à un pixel, et un second substrat (22) en regard du premier (10), caractérisé en ce que ledit écran comporte sur le second substrat des bandes (26) conductrices et parallèles, alternativement recouvertes d'un matériau luminescent (28) dans le rouge formant des anodes dites rouges, d'un matériau luminescent (29) dans le vert formant des anodes dites vertes, et d'un matériau luminescent (30) dans le bleu formant des anodes dites bleues, les bandes (26) conductrices recouvertes du même matériau (28, 29, 30) luminescent étant électriquement reliées entre elles, ces bandes (26) conductrices étant régulièrement espacées de façon que chaque croisement d'un conducteur cathodique et d'une grille soit en face de trois anodes recouvertes respectivement d'un matériau luminescent dans le rouge, le vert et le bleu.

2. Ecran selon la revendication 1, caractérisé en ce qu'il comprend des moyens pour adresser séquentiellement les lignes.

3. Procédé d'adressage d'un écran fluorescent trichrome à micropointes conçu selon la revendication 1 ou 2, caractérisé en ce qu'il consiste à porter les anodes Ai, i allant de 1 à 3, successivement et périodiquement à un potentiel VAimax, suffisant pour attirer les électrons émis par les micropointes (14) des conducteurs cathodiques (12) correspondant aux pixels devant être "allumés" dans la couleur de l'anode Ai considérée et,lorsque les anodes Ai ne sont pas portées au potentiel VAimax, à les porter à un potentiel VAimin tel que les électrons émis par les micropointes (14) sont repoussés.

4. Procédé d'adressage selon la revendication 3, L'affichage d'une trame trichrome de l'image se faisant pendant un temps de trame T, caractérisé en ce que les anodes Ai sont portées au potentiel VAimax selon une période égale au temps de trame T, ce temps de trame T étant divisé en trois durées t1, t2, t3 correspondant aux durées pendant lesquelles les anodes A1, A2, A3 sont portées aux potentiels VA1max, VA2max, VA3max.

5. Procédé d'adressage selon la revendication 3, l'affichage d'une trame trichrome de l'image se faisant en adressant séquentiellement chaque ligne de conducteur grille (16) pendant un temps de sélection t, caractérisé en ce que les anodes Ai sont portées au potentiel VAimax selon une période égale au temps de sélection t, ce temps de sélection t étant divisé en trois durées $\theta$1, $\theta$2, $\theta$3 correspondant aux durées pendant lesquelles les anodes A1, A2, A3 sont portées aux potentiels VA1max, VA2max, VA3max.

6. Procédé d'adressage d'un écran fluorescent trichrome à micropointes conçu selon la revendication 1 ou 2, caractérisé en ce qu'il consiste à porter les anodes Ai, i allant de 1 à 3, successivement et périodiquement à un potentiel VAimax, suffisant pour attirer les électrons émis par les micropointes (14) des conducteurs cathodiques (12) correspondant aux pixels devant être "allumés" dans la couleur de l'anode Ai considérée et,lorsque les anodes Ai ne sont pas portées au potentiel VAimax, à les porter à un potentiel VAimin tel que les électrons émis par les micropointes (14) ont une énergie inférieure à l'énergie seuil de cathodoluminescence des matériaux (28, 29, 30) luminescents recouvrant les anodes Ai.

7. Procédé d'adressage selon la revendication 6, l'affichage d'une trame trichrome de l'image se faisant pendant un temps de trame T, caractérisé en ce que les anodes Ai sont portées au potentiel VAimax selon une période égale au temps de trame T, ce temps de trame T étant divisé en trois durées t1, t2, t3 correspondant aux durées pendant lesquelles les anodes A1, A2, A3 sont portées aux potentiels VA1max, VA2max, VA3max.

8. Procédé d'adressage selon la revendication 6, l'affichage d'une trame trichrome de l'image se faisant en adressant séquentiellement chaque ligne de conducteur grille (16) pendant un temps de sélection t, caractérisé en ce que les anodes Ai sont portées au potentiel VAimax selon une période égale au temps de sélection t, ce temps de sélection t étant divisé en trois durées $\theta$1, $\theta$2, $\theta$3 correspondant aux durées pendant lesquelles Les anodes A1, A2, A3 sont portées aux potentiels VA1max, VA2max, VA3max.

9. Procédé de fabrication d'un écran fluorescent trichrome à micropointes selon la revendication 1, le second substrat (22) étant recouvert d'un matériau conducteur, caractérisé en ce qu'il consiste à :
   - graver dans ledit matériau des bandes (26) parallèles régulièrement espacées, les bandes (26) étant alternativement regroupées en trois séries, une première série de ces bandes (26) étant reliée électriquement par une première bande de connexion (32) en matériau conducteur, cette première bande de connexion (32) étant perpendiculaire aux bandes (26) parallèles et placée à une de leurs extrémités, une seconde série de ces bandes (26) parallèles étant reliée électriquement par une seconde bande de connexion (34) en matériau conducteur, cette seconde bande de connexion (34) étant perpendiculaire aux bandes (26) parallèles et placée à l'autre de leurs extrémités,
   - relier électriquement la troisième série de bandes (26) parallèles par un ruban conducteur anisotrope (36),
   - recouvrir une série de bandes (26) parallèles par un matériau (28) apte à émettre de la luminescence dans le rouge, une seconde série de bandes (26) parallèles par un matériau (29) apte à émettre de la luminescence dans le bleu, la dernière série de bandes (26) parallèles par un matériau (30) apte à émettre de la luminescence dans le vert.

## Claims

1. Matrix display microdot trichromatic flourescent screen having first substrate (10) on which are arranged in two directions of the matrix of conductor columns (12) forming cathode conductors and supporting the microdots (14) and above the columns perforated conductive rows (16) forming grids, the rows and columns being separated by an insulating layer (18) having apertures permitting the passage of the microdots (14), each intersection of a cathode conductor and a grid corresponding to a pixel, and a second substrate (22) facing the first substrate (10), characterized in that said screen has on the second substrate parallel, conductive bands (26) alternately covered by a material (28) luminescing in the red forming so-called red anodes, a material (29) luminescing in the green forming so-called green anodes and a material (30) luminescing in the blue forming so-called blue anodes, the conductive bands (26) covered with the same luminescent material (28, 29, 30) being electrically interconnected, said conductive bands (26) being regularly spaced in such a way that each intersection of a cathode conductor and a grid faces three anodes covered respectively by a material luminescing in the red, green and blue.

2. Screen according to claim 1, characterized in that it comprises means for sequentially addressing the rows.

3. Process for addressing a microdot trichromatic fluorescent screen according to claim 1 or 2, characterized in that it comprises raising the anodes Ai, i.e. ranging between 1 and 3, successively and periodically to a potential VAimax adequate for attracting the electrons emitted by the microdots (14) of the cathode conductors (12) corresponding to the pixels having to be "illuminated" in the colour of the considered anode Ai; when they are not raised to the potential VAimax, the anodes Ai are raised to a potential VAimin, such that the electrons emitted by the microdots (14) are repelled.

4. Addressing process according to claim 3, the addressing of a trichromatic frame of the picture taking place during a frame time T, characterized in that the anodes Ai are raised to the potential VAimax for a period equal to the frame time T, which is subdivided into three periods t1, t2 and t3 corresponding to the times during which the anodes A1, A2 and A3 are raised to the potentials VA1max, VA2max and VA3max.

5. Addressing process according to claim 3, the display of a trichromatic frame of the picture taking place by sequentially addressing each grid conductor row (16) for a selection time t, characterized in that the anodes Ai are raised to the potential VAimax for a period equal to the selection time t, which is subdivided into three periods $\theta 1$, $\theta 2$ and $\theta 3$ corresponding to the times during which the anodes A1, A2 and A3 are raised to the potentials VA1max, VA2max and VA3max.

6. Process for addressing a microdot trichromatic fluorescent screen according to claim 1 or 2, characterized in that it comprises raising the anodes Ai, i ranging between 1 and 3, successively and periodically to a potential VAimax adequate for attracting the electrons emitted by the microdots (14) of the cathode conductors (12) corresponding to the pixels having to be "illuminated" in the considered colour of the anode Ai; when they are not raised to the potential VAimax, the anodes Ai are raised to a potential VAimin, such that the electrons emitted by the microdots (14) have an energy below the threshold cathodoluminescence energy of the luminescent materials (28, 29, 30) covering the anodes Ai.

7. Addressing process according to claim 6, the addressing of a trichromatic frame of the picture tailing place for a frame time T, characterized in that the anodes Ai are raised to the potential VAimax for a period equal to the frame time T, which is subdivided into three durations t1, t2 and t3 corresponding to the times during which the anodes A1, A2 and A3 are raised to the potentials VA1max, VA2max and VA3max.

8. Addressing process according to claim 6, the display of a trichromatic frame of the picture taking place by sequentially addressing each grid conductor row (16) for a selection time t, characterized in that the anodes Ai are raised to the potential VAimax for a period equal to the selection time t, which is subdivided into three durations $\theta 1$, $\theta 2$ and $\theta 3$ corresponding to the times during which the anodes A1, A2 and A3 are raised to the potentials VA1max, VA2max and VA3max.

9. Process for the production of a microdot trichromatic fluorescent screen according to claim 1, the second substrate (22) being covered with a conductive material, characterized in that it comprises etching in said material regularly spaced, parallel bands (26), which are alternately grouped into three series, a first series of bands (26) being electrically connected by a first conductive material connection band (32), which is perpendicular to the parallel bands (26) and is placed at one of the ends thereof, a second series of the parallel bands (26) being electrically connected by a second conductive material connection band (34), which is perpendicular to the parallel bands (26) and is placed at the other of the ends thereof, electrically connecting the third series of parallel bands (26) by an anisotropic conductive ribbon (36) and covering one series of parallel bands (26) by a material (28) able to emit luminescence in the red, a second series of parallel bands (26) by a material (29) able to emit luminescence in the blue and the final series of parallel bands by a material (30) able to emit luminescence in the green.

**Patentansprüche**

1. Dreifarben-Leuchtschirm mit Mikrospitzen-Kathoden mit Matrixanzeige, umfassend ein erstes Substrat (10), auf dem in beiden Richtungen der Matrix leitende Spalten (12) angeordnet sind, kathodische Leiter bildend und Mikrospitzen (14) enthaltend, und über den Spalten leitende perforierte Zeilen (16), Gitter bzw. Gates bildend, wobei die Spalten und die Zeilen getrennt sind durch eine Isolierschicht (18), versehen mit Öffnungen, den Durchgang der Mikrospitzen (14) gestattend, wobei jede Kreuzungsstelle eines kathodischen Leiters und eines Gates einem Pixel entspricht, und ein zweites Substrat (22), dem ersten (10) gegenüberliegend,
dadurch **gekennzeichnet,**
daß der genannte Schirm auf dem zweiten Substrat leitende und parallele Streifen bzw. Bänder (26) enthält, wechselweise beschichtet mit einem Material (28), lumineszierend in dem Rot, das Rotanoden genannte Anoden bildet, einem Material (29), lumineszierend in dem Grün, das Grünanoden genannte Anoden bildet, und einem Material (30), lumineszierend in dem Blau, das Blauanoden genannte Anoden bildet, wobei die mit dem gleichen lumineszierenden Material (28, 29, 30) beschichteten Bänder (26) elektrisch miteinander verbunden sind, wobei diese leitenden Bänder (26) gleichmäßig beabstandet sind, so daß jede Kreuzungsstelle eines kathodischen Leiters und eines Gates drei Anoden gegenübersteht, die jeweils mit einem rot bzw. grün bzw. blau lumineszierenden Material beschichtet sind.

2. Leuchtschirm nach Anspruch 1, dadurch gekennzeichnet, daß er Einrichtungen für ein sequentielles Addressieren der Zeilen enthält.

3. Adressierverfahren eines Dreifarben-Leuchtschirms mit Mikrospitzen-Kathoden, entwickelt gemäß Anspruch 1 oder 2, dadurch gekennzeichnet, daß es darin besteht, die Anoden Ai, wobei i von 1 bis 3 geht, nacheinander und periodisch auf ein Potential VAimax zu bringen, ausreichend um die Elektronen anzuziehen, die emittiert werden von den Mikrospitzen (14) der kathodischen Leiter (12), die den Pixeln entsprechen, die "gezündet" werden sollen in der Farbe der betreffenden Anode Ai und, wenn die Anoden Ai nicht auf das Potential VAimax gebracht werden, sie auf ein solches Potential VAimin zu bringen, daß die von den Mikrospitzen (14) emittierten Elektronen abgestoßen werden.

4. Adressierverfahren nach Anspruch 3, wobei die Anzeige eines dreifarbigen Bildrasters erfolgt während einer Rasterzeit T, dadurch gekennzeichnet, daß die Anoden Ai auf das Potential Vimax gebracht werden gemäß einer der Rasterzeit T entsprechenden Periode, wobei diese Rasterzeit T aufgeteilt wird in drei Zeitdauern t1, t2, t3, die den Zeitdauern entsprechen, während denen die Anoden A1, A2, A3 auf die Potentiale VA1max, VA2max, VA3max gebracht werden.

5. Adressierverfahren nach Anspruch 3, wobei die Anzeige eines dreifarbigen Bildrasters erfolgt, indem sequentiell jede Gate-Leiterzeile (16) während einer Selektionszeit t adressiert wird, dadurch gekennzeichnet, daß die Anoden Ai auf das Potential VAimax gebracht werden gemäß einer der Selektionszeit t entsprechenden Periode, wobei diese Selektionszeit t aufgeteilt wird in drei Zeitdauern $\theta1$, $\theta2$, $\theta3$, die den Zeitdauern entsprechen, während denen die Anoden A1, A2, A3 auf die Potentiale VA1max, VA2max, VA3max gebracht werden.

6. Adressierverfahren eines Dreifarben-Leuchtschirms mit Mikrospitzen-Kathoden, entwickelt gemäß Anspruch 1 oder 2, dadurch gekennzeichnet daß es darin besteht, die Anoden Ai, wobei i von 1 bis 3 geht, nacheinander und periodisch auf ein Potential VAimax zu bringen, ausreichend um die Elektronen anzuziehen, die emittiert werden von den Mikrospitzen (14) der kathodischen Leiter (12), die den Pixeln entsprechen, die "gezündet" werden sollen in der Farbe der betreffenden Anode Ai und, wenn die Anoden Ai nicht auf das Potential VAimax gebracht werden, sie auf ein solches Potential VAimin zu bringen, daß die von den Mikrospitzen (14) emittierten Elektronen eine Energie haben, die kleiner ist als die Kathodolumineszenz der die Anoden Ai beschichtenden lumineszierenden Materialien (28, 29, 30).

7. Adressierverfahren nach Anspruch 6, wobei die Anzeige eines dreifarbigen Bildrasters erfolgt während einer Rasterzeit T, dadurch gekennzeichnet, daß die Anoden Ai auf das Potential Vimax gebracht werden gemäß einer der Rasterzeit T entsprechenden Periode, wobei diese Rasterzeit T aufgeteilt wird in drei Zeitdauern t1, t2, t3, die den Zeitdauern entsprechen, während denen die Anoden A1, A2, A3 auf die Potentiale VA1max, VA2max, VA3max gebracht werden.

8. Adressierverfahren nach Anspruch 6, wobei die Anzeige eines dreifarbigen Bildrasters erfolgt, indem sequentiell jede Gate-Leiterzeile (16) während einer Selektionszeit t adressiert wird, dadurch gekennzeichnet, daß die Anoden Ai auf das Potential VAimax gebracht werden gemäß einer der Selektionszeit t entsprechenden Periode, wobei diese Selektionszeit t aufgeteilt wird in drei Zeitdauern $\theta1$, $\theta2$, $\theta3$, die den Zeitdauern entsprechen, während denen die Anoden A1, A2, A3 auf die Potentiale VA1max, VA2max, VA3max gebracht werden.

9. Adressierverfahren eines Dreifarben-Leuchtschirms mit Mikrospitzen-Kathoden gemäß Anspruch 1, wobei das zweite Substrat (22) mit einem leitenden Material beschichtet ist, dadurch gekennzeichnet, daß es darin besteht:
   - in das genannte Material parallele, regelmäßig beabstandete Streifen (26) zu ätzen, wobei die Streifen (26) wechselweise in drei Reihen zusammengefaßt werden, wobei eine erste Reihe dieser Streifen (26) elektrisch verbunden wird durch einen ersten Verbindungsstreifen (32) aus leitendem Material, wobei dieser erste Verbindungsstreifen (32) senkrecht verläuft zu den parallelen Streifen (26), und an ihren einen Enden angeordnet ist, wobei eine zweite Reihe dieser parallelen Bänder (26) elektrisch verbunden wird durch ein zweites Verbindungsband (34) aus elektrisch leitendem Material, wobei dieses zweite Verbindungsband (34) senkrecht ist zu den parallelen Streifen (26) und an ihren anderen Enden angeordnet ist,
   - die dritte Reihe paralleler streifen (26) durch ein anisotropes leitendes Band (36) zu verbinden,
   - eine Reihe der parallelen Streifen (26) mit einem Material (28) zu beschichten, das fähig ist, Lumineszenz im Rotbereich auszustrahlen, eine zweite Reihe paralleler Streifen (26) mit einem Material (29) zu beschichten, das fähig ist, Lumineszenz im Blaubereich auszustrahlen, die letzte Reihe paralleler Streifen (26) mit einem Material (30) zu beschichten, das fähig ist, Lumineszenz im Grünbereich auszustrahlen.

FIG. 1

FIG. 2

FIG. 3

FIG. 4

FIG. 5

FIG. 6

14

# FIG. 7

# FIG. 8